# EUROPÄISCHE PATENTANMELDUNG

(11) **EP 3 505 293 A1**
(43) Veröffentlichungstag der Anmeldung: **03.07.2019**
(21) Anmeldenummer: 18207234.8
(22) Anmeldetag: 20.11.2018
(51) Int. Cl.: B23K 26/21, B23K 101/00, B23K 103/18

(54) **VERFAHREN ZUR VERBINDUNG VON BAUTEILEN MITTELS GENERATIVER FERTIGUNG UND VORRICHTUNG**

(30) Priorität: 20.12.2017 DE 102017223411
(71) Anmelder: Rolls-Royce Deutschland Ltd & Co KG, 15827 Blankenfelde-Mahlow (DE)
(72) Erfinder: ULRICHSOHN, Björn, 15827 Blankenfelde-Mahlow (DE); HINZE, Björn, 15827 Blankenfelde-Mahlow (DE)
(74) Vertreter: Maikowski & Ninnemann Patentanwälte Partnerschaft mbB

(57) **Zusammenfassung**

Die Erfindung betrifft ein Verfahren zur Verbindung von Bauteilen, umfassend die folgenden Schritte: Bereitstellen (S100) eines ersten Bauteils (10, 10A, 10B) mit zumindest einem Verbindungsbereich (100), wobei zumindest der Verbindungsbereich (100) aus einer Metalllegierung besteht oder eine Metalllegierung umfasst; Bereitstellen (S101) zumindest eines zweiten Bauteils (11, 11A) mit einem Verbindungsbereich (110), wobei zumindest der Verbindungsbereich (110) aus einer Metalllegierung besteht oder eine Metalllegierung umfasst; Anordnen (S102) der Verbindungsbereiche (100, 110) des ersten und des zweiten Bauteils (10, 10A, 10B, 11, 11A) benachbart zueinander; und Verbinden (S103) der Verbindungsbereiche (100, 110) miteinander mittels generativer Fertigung, insbesondere durch Auftragsschweißen.. Die Erfindung betrifft ferner eine entsprechende Vorrichtung.

## Beschreibung

Die Erfindung betrifft ein Verfahren zur Verbindung von Bauteilen nach Anspruch 1 und eine Vorrichtung nach Anspruch 11.

Insbesondere im Flugzeugbau besteht ein Bedarf nach möglichst leistungsstarken Bauteilen, die gleichzeitig ein möglichst geringes Gewicht aufweisen sollen. Hierzu werden Metalllegierungen mit einer besonders hohen Festigkeit und/oder Temperaturresistenz entwickelt, insbesondere Legierungen auf Nickelbasis. Dabei besteht allerdings die Schwierigkeit, dass besonders leistungsfähige Legierungen oftmals nicht oder nur in nicht zufriedenstellender Weise schweißbar sind. Das gilt insbesondere für Legierungen mit einem hohen Gamma-Prime-Anteil (y'). Um mehrere Komponenten miteinander zu verbinden, wird daher oftmals auf formschlüssige Verbindungen zurückgegriffen. Beispielsweise können zwei Bauteile mit einem Bolzen und einer Mutter miteinander verschraubt werden, was jedoch zu einem erhöhten Gewicht führen kann.

Besondere Relevanz hat diese Problematik bei Schaufelkränzen in Strömungsmaschinen. Dort ist eine Vielzahl von Schaufelblättern regelmäßig mit einem Ring oder einer Scheibe verbunden. Mehrere Scheiben oder Ringe werden wiederum miteinander verbunden. Wird jede dieser Verbindungen durch einen Bolzen und eine Mutter hergestellt, entfällt ein nicht unerheblicher Teil des Gewichts des Schaufelkranzes auf die Verbindungen. Es ist auch bekannt, einen Schaufelkranz einstückig samt Schaufelblättern in einem Gussvorgang herzustellen. Hierbei sind jedoch komplexe Schaufelgeometrien nur schwierig zu realisieren und es können keine unterschiedlichen Materialien für den Ring oder die Scheibe einerseits und die Schaufelblätter andererseits verwendet werden. Insbesondere in der heißen Umgebung einer Turbine kann es jedoch notwendig sein, unterschiedliche Materialien vorzusehen. Sollen die Bauteile des Schaufelkranzes miteinander verschweißt werden, z.B. mittels Reibschweißen oder Elektronenstrahlschweißen, können einige Materialien und Materialkombinationen nicht verwendet werden. Insbesondere hochfeste und besonders temperaturstabile Metalllegierungen, z.B. einige Nickelbasislegierungen, eignen sich nicht für solche Schweißverfahren.

Insbesondere ist es bei der Verbindung mehrerer Scheiben oder mehrerer Ringe aneinander, z.B. zur Bildung einer Turbinenstufe oder einer Verdichterstufe, bislang nicht möglich, einige besonders vorteilhafte, insbesondere hochfeste und temperaturstabile Metalllegierungen, z.B. einige Nickelbasislegierungen, für die Scheiben oder Ringe einzusetzen und diese miteinander zu verschweißen.

Es besteht die Aufgabe, ein verbessertes Verfahren zur Verbindung von Bauteilen bereitzustellen, insbesondere ein Verfahren, das es ermöglicht, leistungsfähige Materialien miteinander zu verbinden, ohne das Gewicht deutlich zu erhöhen, sowie eine Vorrichtung mit dementsprechend verbundenen Bauteilen.

Die Aufgabe wird durch ein Verfahren zur Verbindung von Bauteilen mit den Merkmalen des Anspruchs 1 gelöst.

Danach sind folgende Schritte vorgesehen: Bereitstellen eines ersten Bauteils mit einem oder mehreren Verbindungsbereichen, wobei zumindest ein Verbindungsbereich aus einer Metalllegierung besteht oder eine Metalllegierung umfasst, insbesondere eine Nickelbasislegierung; Bereitstellen eines oder mehrerer zweiter Bauteile mit jeweils zumindest einem Verbindungsbereich, wobei zumindest der Verbindungsbereich aus einer Metalllegierung besteht oder eine Metalllegierung umfasst, insbesondere eine Nickelbasislegierung; Anordnen zumindest eines Verbindungsbereichs des ersten Bauteils benachbart zu zumindest einem Verbindungsbereich eines zweiten Bauteils; und (insbesondere stoffschlüssiges) Verbinden der benachbarten Verbindungsbereiche miteinander mittels eines generativen Fertigungsverfahrens, insbesondere durch Auftragsschweißen. Auf diese Weise werden die Bauteile miteinander insbesondere (unlösbar) gefügt.

Dies basiert auf der Erkenntnis, dass einige Metalllegierungen (insbesondere Materialien mit einem hohen Gamma-Prime-Anteil) aus dem Grund nicht zufriedenstellend mittels Reibschweißen oder Elektronenstrahlschweißen verschweißbar sind, weil in diesen Prozessen ein zu hoher Energieeintrag die Materialstruktur der Legierungen beeinträchtigen kann. Bei zu hohen Energieeinträgen kann es insbesondere zu Brüchen oder Rissen kommen. Zudem ist der Aufwand eines Prüfverfahrens, mit dem die Belastbarkeit einer so hergestellten Verbindung getestet wird, sehr aufwändig.

Bei generativen Fertigungsverfahren, insbesondere beim Auftragsschweißen, ist es demgegenüber möglich, dass vergleichsweise nur sehr geringe Energieeinträge in das Material der zu verbindenden Bauteile eingebracht werden. So kann z.B. in mehreren Durchgängen eine stoffschlüssige Verbindung der beiden Bauteile (generativ) aufgebaut werden. Das Material kann in einer Vielzahl von Lagen aufgebracht werden. Generative Fertigungsverfahren werden allgemein auch als Additive Layer Manufacturing, kurz ALM, bezeichnet.

Die Verbindungsbereiche können derart geformt sein, dass durch das Anordnen der Verbindungsbereiche benachbart zueinander zwischen den Verbindungsbereichen ein Zwischenraum ausgebildet wird. Dabei kann durch die generative Fertigung, insbesondere durch das Auftragsschweißen, Material in den Zwischenraum eingebracht werden. Insbesondere kann der Zwischenraum mit Material aufgefüllt werden (z.B. vollständig ausgefüllt werden). Der Zwischenraum kann dadurch ausgebildet werden, dass einander zugewandte Oberflächen der Verbindungsbereiche zumindest abschnittsweise beabstandet voneinander sind. Insbesondere ist es möglich, dass einander zugewandte Oberflächen der Verbindungsbereiche geneigt oder gekrümmt zueinander verlaufen. Durch den Zwischenraum kann somit eine Aufnahme für das Material bereitgestellt werden, das bei der generativen Fertigung aufgebracht wird. Die Aufnahme stützt das aufgebrachte Material ab. Ein Boden der Aufnahme kann z.B. dadurch geschlossen werden, indem das erste Bauteil und das zweite Bauteil einander am Boden berühren.

Gemäß einer Ausgestaltung ist der Zwischenraum trichterförmig oder wannenförmig. Hierdurch kann der Zwischenraum besonders gut das mittels der generativen Fertigung eingebrachte Material aufnehmen.

Bevorzugt umfasst zumindest eines von dem ersten und dem zweiten Bauteil eine Nickellegierung, insbesondere eine Nickelbasislegierung oder besteht daraus. Insbesondere können sämtliche der Bauteile aus einer oder derselben Nickellegierung, insbesondere Nickelbasislegierung, bestehen oder eine solche Legierung umfassen. Die generative Fertigung, insbesondere das Auftragsschweißen eignet sich besonders für sogenannte Superlegierungen, insbesondere Nickelbasislegierungen wie etwa CMSX-4, Udimet oder RR1000. Derartige Legierungen weisen eine besonders hohe Festigkeit auf und/oder sind besonders temperaturresistent. Durch hohe Gamma-Prime-Anteile ist z.B. ein Elektronenstrahlschweißen nicht oder nicht zufriedenstellend möglich.

Das erste Bauteil und das zweite Bauteil können unterschiedliche Materialien umfassen oder aus unterschiedlichen Materialien bestehen. Beispielsweise besteht das zweite Bauteil aus CMSX-4, Udimet oder RR1000 und das erste Bauteil besteht aus einer anderen Nickelbasislegierung, z.B. Inconel 718. Mittels Reibschweißen wären diese Materialkombinationen nicht oder nicht zufriedenstellend verbindbar. Das vorgeschlagene Verfahren eröffnet somit die Möglichkeit, völlig neue Materialkombinationen stoffschlüssig zu verbinden. Das mittels des generativen Fertigungsverfahrens aufgebrachte Material kann dieselbe Metalllegierung umfassen oder daraus bestehen, wie das erste und/oder das zweite Bauteil.

Bei der generativen Fertigung kann es sich insbesondere um ein Laserauftragsschweißverfahren handeln. Dieses Verfahren ist besonders gut geeignet, Nickelbasislegierungen zu bearbeiten und liefert besonders gute Verbindungen.

Das erste Bauteil kann mehrere Verbindungsbereiche aufweisen. Ferner können mehrere zweite Bauteile bereitgestellt werden, wobei der Verbindungsbereich jedes zweiten Bauteils derart benachbart zu jeweils einem Verbindungsbereich des ersten Bauteils angeordnet wird, dass zwischen den benachbarten Verbindungsbereichen jeweils ein Zwischenraum ausgebildet wird, und wobei die jeweils benachbarten Verbindungsbereiche mittels generativer Fertigung, insbesondere durch Auftragsschweißen miteinander verbunden werden.

In einer Ausgestaltung stellt das erste Bauteil einen Schaufelträger für eine Strömungsmaschine dar oder einen Teil eines solchen Schaufelträgers. Der Schaufelträger kann z.B. die Form eines Rings oder einer Scheibe haben.

Zumindest ein zweites Bauteil ist z.B. ein Schaufelblatt für eine Strömungsmaschine, ein weiteres Teil des Schaufelträgers oder ein weiterer Schaufelträger. Das Schaufelblatt kann auf diese Weise besonders sicher am Schaufelträger moniert werden bzw. die Teile der Schaufelträger oder die Schaufelträger aneinander.

Das Verfahren nach einer beliebigen, hierin beschriebenen Ausgestaltung kann zur Herstellung einer Anordnung mehrerer Schaufelkränze, insbesondere einer Verdichterstufe, einer Turbinenstufe, und/oder eines Schaufelkranzes für eine Strömungsmaschine ausgebildet sein, wobei das erste Bauteil in Form eines Rings oder einer Scheibe einer Strömungsmaschine bereitgestellt wird und das zumindest eine zweite Bauteil in Form eines weiteren Rings oder einer weiteren Scheibe (oder eines weiteren Teils davon) oder einer Schaufel, insbesondere einer Verdichterschaufel oder einer Turbinenschaufel, bereitgestellt wird. So kann ein besonders robuster Schaufelkranz bzw. eine besonders robuste Anordnung mehrerer Schaufelkränze, insbesondere in Form einer Verdichterstufe oder einer Turbinenstufe, hergestellt werden, der zudem ein besonders geringes Gewicht aufweisen kann, da zusätzliche Bolzenverbindungen nicht notwendig sind. Da es sich bei den Schaufelkränzen um im Betrieb der Strömungsmaschine (z.B. in Form einer Gasturbine) rotierende Teile handeln kann, macht sich eine Gewichtsersparnis deutlich bemerkbar. Beispielsweise bestehen die Schaufelblätter aus CMSX-4, Udimet oder RR1000 und der Ring oder die Scheibe besteht aus derselben oder einer anderen Nickelbasislegierung, z.B. aus Inconel 718. Auch bei einer Verbindung von mehreren Scheiben oder mehreren Ringen aneinander können die mehreren Scheiben bzw. Ringe aus CMSX-4, Udimet oder RR1000 bestehen.

Die oben genannte Aufgabe wird auch durch eine Vorrichtung gelöst, hergestellt oder herstellbar durch das Verfahren nach einer beliebigen, hierin beschriebenen Ausgestaltung.

Die oben genannte Aufgabe wird auch durch eine Vorrichtung mit den Merkmalen des Anspruchs 11 gelöst. Danach ist die Vorrichtung insbesondere hergestellt oder herstellbar durch das Verfahren nach einer beliebigen, hierin beschriebenen Ausgestaltung und umfasst ein erstes Bauteil mit zumindest einem Verbindungsbereich, zumindest ein zweites Bauteil mit einem Verbindungsbereich, wobei die Verbindungsbereiche des ersten und des zweiten Bauteils jeweils aus einer Metalllegierung bestehen oder eine Metalllegierung umfassen und derart benachbart zueinander angeordnet sind, dass zwischen den Verbindungsbereichen ein Zwischenraum ausgebildet ist, und wobei die Verbindungsbereiche durch zumindest eine durch die generative Fertigung erzeugte Naht, insbesondere zumindest eine Auftragsschweißnaht, miteinander verbunden sind, die den Zwischenraum zumindest teilweise ausfüllt.

Die Naht, insbesondere die Auftragsschweißnaht, ist an ihrer charakteristischen Form und Struktur, oberflächlich sowie im Querschnitt eindeutig identifizierbar.

Die Vorrichtung kann als Schaufelkranz für eine Strömungsmaschine ausgebildet sein und mehrere zweite Bauteile in Form jeweils eines Schaufelblatts umfassen. Ferner kann die die Vorrichtung als Turbinen- oder Verdichterstufe für eine Strömungsmaschine ausgebildet sein, wobei das erste Bauteil in Form eines Rings oder einer Scheibe für eine Strömungsmaschine ausgebildet ist und zumindest ein zweites Bauteil in Form eines weiteren Rings oder einer weiteren Scheibe ausgebildet ist.

Hinsichtlich der übrigen möglichen Ausgestaltungen insbesondere des ersten und zweiten Bauteils und hinsichtlich der entsprechenden Vorteile wird auf die obigen Ausführung zum Verfahren zur Verbindung der Bauteile und zur Herstellung des Schaufelkranzes Bezug genommen.

Im Zusammenhang mit den in den Figuren dargestellten Ausführungsbeispielen wird die Erfindung erläutert. Dabei zeigen
- Fig. 1: eine schematische Querschnittsdarstellung von Verbindungsbereichen eines ersten und eines zweiten Bauteils, die durch Auftragsschweißnähte miteinander verbunden sind;
- Fig. 2: ein Verfahren zum Fügen von Bauteilen;
- Fig. 3: eine schematische Schnittdarstellung eines Schaufelkranzes für eine Gasturbine mit einem ersten Bauteil und mehreren zweiten Bauteilen;
- Fig. 4: eine schematische Schnittdarstellung eines weiteren Schaufelkranzes für eine Gasturbine mit einem ersten Bauteil und mehreren zweiten Bauteilen; und
- Fig. 5: eine schematische Schnittdarstellung einer Gasturbine mit einem Fan, einem Verdichter und einer Turbine mit mehreren Schaufelkränzen;

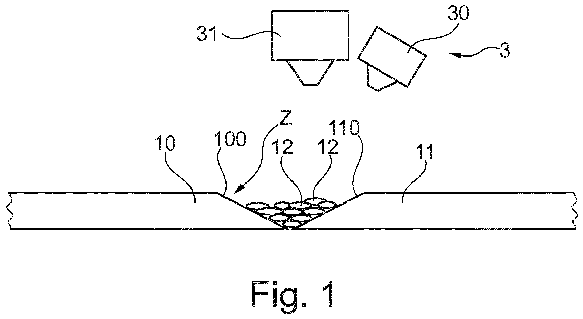

Fig. 1 zeigt ein erstes Bauteil 10 und ein zweites Bauteil 11, die durch Auftragsschweißraupen oder Auftragsschweißnähte 12 miteinander verbunden sind.

Zumindest eines von dem ersten Bauteil 10 und dem zweiten Bauteil 11 umfasst eine Nickelbasislegierung. Vorzugsweise bestehen beide Bauteile 10, 11 jeweils (zumindest überwiegend) aus derselben oder aus unterschiedlichen Nickelbasislegierungen. Beispielhafte Legierungen tragen die Bezeichnung CMSX-4, Udimet und RR1000. Die Nickelbasislegierung(en) ist/sind mittels Reibschweißen oder mittels Elektronenstrahlschweißen nicht oder nicht in zufriedenstellender Weise schweißbar.

Das erste Bauteil 10 weist einen Verbindungsbereich 100 auf. Vorliegend ist der Verbindungsbereich 100 in Form einer zu einem Ende des ersten Bauteils 10 schräg abfallenden Fläche ausgebildet. Auch das zweite Bauteil 11 weist einen Verbindungsbereich 110 auf. Vorliegend ist auch der Verbindungsbereich 110 in Form einer zu einem Ende des zweiten Bauteils 11 schräg abfallenden Fläche ausgebildet.

Die beiden Bauteile 10, 11 sind so angeordnet, dass die beiden Verbindungsbereiche 100, 110 einander zugewandt sind. Die Bauteile 10, 11 sind benachbart und angrenzend zueinander angeordnet, optional berühren sich die Bauteile 10, 11.

Die Verbindungsbereiche 100, 110 der beiden Bauteile 10, 11 sind derart geformt und die Bauteile 10, 11 sind so angeordnet, dass zwischen den Verbindungsbereichen 100, 110 ein Zwischenraum Z ausgebildet ist. Vorliegend ist der Zwischenraum Z im Querschnitt dreieckig oder trichterförmig ausgebildet, wobei auch andere Formen denkbar sind. Insbesondere kann der Zwischenraum Z wannenförmig sein. Die übrige Form der in Fig. 1 gezeigten Bauteile ist lediglich beispielhaft.

Im Zwischenraum Z sind mehrere Auftragsschweißnähte 12 ausgebildet. Die Auftragsschweißnähte stellen eine stoffschlüssige Verbindung zwischen dem ersten Bauteil 10 und dem zweiten Bauteil 11 her. Gemäß Fig. 1 ist der Zwischenraum Z durch die Auftragsschweißnähte 12 teilweise aufgefüllt, konkret durch eine Vielzahl von Lagen von Auftragsschweißnähten 12. Optional kann der Zwischenraum Z auch vollständig aufgefüllt werden, insbesondere durch eine Vielzahl von Lagen.

Das Auftragsschweißen erfolgt mit einer Schweißvorrichtung 3. Die beispielhaft gezeigte Schweißvorrichtung 3 umfasst zumindest ein Pulverzuführungsmittel 30 und zumindest einen Laser 31. Die Schweißvorrichtung 3 ist ausgebildet zum Laserauftragsschweißen.

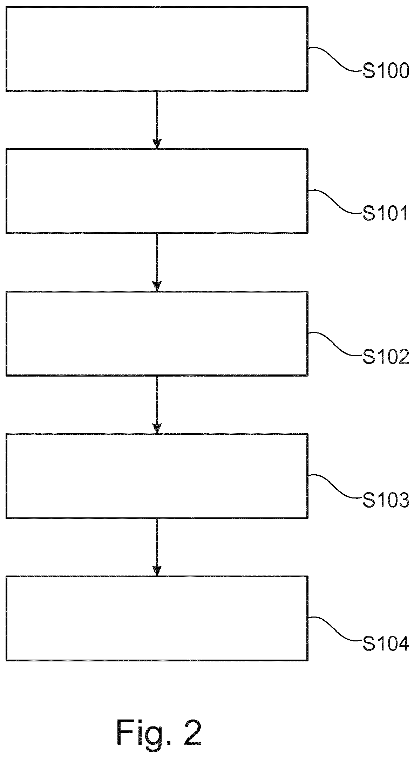

Das Verbinden der Bauteile 10, 11 erfolgt mittels dem Fügeverfahren gemäß Fig. 2.

Demnach wird in einem ersten Schritt S100 das erste Bauteil 10 bereitgestellt. Das erste Bauteil 10 umfasst zumindest den Verbindungsbereich 100, insbesondere eine Vielzahl von Verbindungsbereichen 100.

In einem zweiten Schritt S101 wird zumindest ein zweites Bauteil 11 bereitgestellt, insbesondere eine Vielzahl von zweiten Bauteilen 11. Das oder jedes zweite Bauteil 11 umfasst zumindest einen Verbindungsbereich 110, z.B. wie in Fig. 1 gezeigt. Selbstverständlich ist die Reihenfolge des ersten und des zweiten Schritts unerheblich.

In einem dritten Schritt S102 werden die Bauteile 10, 11 derart angeordnet, dass deren Verbindungsbereiche 100, 110 benachbart zueinander angeordnet sind, insbesondere einander zugewandt. Optional berühren sich die Verbindungsbereiche 100, 110 an zumindest einer Stelle. Die Anordnung der Bauteile 10, 11 erfolgt derart, dass zwischen den benachbart angeordneten Verbindungbereichen 100, 110 ein Zwischenraum Z ausgebildet ist. Der Zwischenraum Z bildet eine Aufnahme zum Aufnehmen von Auftragsschweißmaterial aus.

In einem vierten Schritt S103 werden die benachbart zueinander angeordneten Verbindungsbereiche 100, 110 durch ein generatives Fertigungsverfahren, im vorliegenden Beispiel durch Auftragsschweißen, insbesondere durch Laserauftragschweißen, stoffschlüssig miteinander verbunden. Durch das Auftragsschweißen wird Material in den Zwischenraum Z eingebracht, insbesondere in Form von länglichen Raupen oder Nähten. Der Zwischenraum Z wird mittels des Auftragsschweißens teilweise oder vollständig mit Material aufgefüllt. Durch die im Querschnitt z.B. dreieckige oder im Allgemeinen zur Schweißvorrichtung 3 hin breiter werdende Aufnahme ist das Material besonders gut, insbesondere lückenlos, einbringbar.

Zum Auftragsschweißen wird mittels des in Fig. 1 gezeigten Pulverzuführungsmittels 30 Pulver in den Zwischenraum Z eingebracht. Das Pulver wird durch Laserlicht des Lasers 31 geschmolzen, um eine stoffschlüssige Verbindung mit den Verbindungsbereichen 100, 110 und/oder benachbarten Auftragsschweißnähten 12 herzustellen. Das Pulver kann eine Nickelbasislegierung umfassen oder daraus bestehen. Beispielsweise umfasst das Pulver dieselbe Nickelbasislegierung wie das erste und/oder das zweite Bauteil 10, 11.

In einem optionalen fünften Schritt S104 wird eine Schweißnachbehandlung vorgenommen, z.B. durch Temperieren der aus den beiden miteinander verbundenen Bauteilen 10, 11 hergestellten Vorrichtung. Alternativ oder zusätzlich wird die Auftragsschweißnaht 12 oder werden die Auftragsschweißnähte 12 geschliffen, z.B. um eine durchgehend glatte Oberfläche vom ersten Bauteil 10 zum zweiten Bauteil 11 herzustellen.

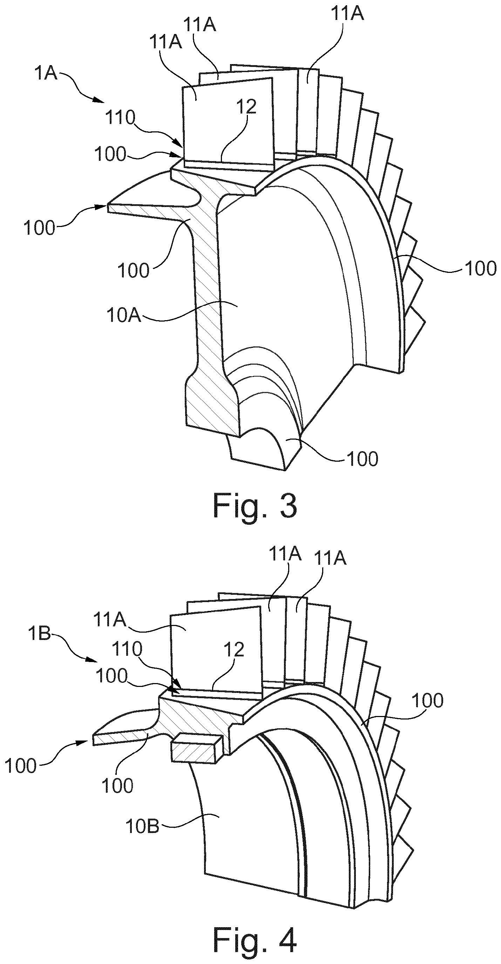

Die Fig. 3 und 4 zeigen in aufgeschnittenen Ansichten jeweils einen Schaufelkranz 1A, 1B für eine Strömungsmaschine. Die Schaufelkränze 1A, 1B sind jeweils symmetrisch um eine zentrale Achse ausgebildet, die im in der Strömungsmaschine eingebauten Zustand mit einer zentralen Rotationsachse der Strömungsmaschine zusammenfällt.

Der Schaufelkranz 1A gemäß Fig. 3 umfasst ein erstes Bauteil 10A in Form einer (kreisförmigen oder im Wesentlichen kreisförmigen) Scheibe. Das erste Bauteil 10A dient als Schaufelträger. Am ersten Bauteil 10A ist (an dessen Außenumfang) eine Vielzahl von zweiten Bauteilen 11A in Form jeweils eines Schaufelblatts vorgesehen. Das erste Bauteil 10A ist stoffschlüssig mit jedem der zweiten Bauteile 11A verbunden. Der Schaufelkranz 1A ist ein sogenanntes Blisk (Kurzform für "blade integrated disk").

Der Schaufelkranz 1B gemäß Fig. 4 umfasst ein erstes Bauteil 10B in Form eines (kreisförmigen oder im Wesentlichen kreisförmigen) Rings. Das erste Bauteil 10B dient als Schaufelträger. Am ersten Bauteil 10B ist (an dessen Außenumfang) eine Vielzahl von zweiten Bauteilen 11A in Form jeweils eines Schaufelblatts vorgesehen. Alternativ ist auch eine Anordnung entlang des Innenumfangs des ersten Bauteils 10B möglich. Das erste Bauteil 10B ist stoffschlüssig mit jedem der zweiten Bauteile 11A verbunden. Der Schaufelkranz 1B ist ein sogenanntes Bling (Kurzform für "blade integrated ring").

Besonders geeignete Materialien für die Schaufelkränze 1A, 1B sind Nickelbasislegierungen. Nickelbasislegierungen sind oftmals nur in nicht zufriedenstellender Weise oder gar nicht miteinander verschweißbar, z.B. mittels Reibschweißen oder Elektronenstrahlschweißen. Auch können sich die technischen Anforderungen an das Material des jeweils ersten Bauteils 10A, 10B und der zweiten Bauteile 11A voneinander unterscheiden, sodass eines der beiden Materialien nicht oder nur in nicht zufriedenstellender Weise mittels Reibschweißen oder Elektronenstrahlschweißen schweißbar sind.

Die stoffschlüssige Verbindung des jeweils ersten Bauteils 10A, 10B der Schaufelkränze 1A, 1B gemäß Fig. 3 und Fig. 4 mit den jeweiligen zweiten Bauteilen 11A ist an einander zugewandten Verbindungsbereichen 100, 110 des ersten Bauteils 10A, 10B und der zweiten Bauteile 11A ausgebildet, vorliegend im Fuß oder im Bereich des Fußes des jeweiligen zweiten Bauteils 11A. Die Verbindung ist mittels einer oder mehreren Auftragsschweißnähten 12 ausgebildet. Die Auftragsscheißnähte 12 sind, insbesondere wenn der Verbindungsbereich nicht geschliffen worden ist, äußerlich an den typischen, raupenförmigen Auftragsschweißnähten 12 zu erkennen. Auch im Querschnitt lassen sich die Auftragsschweißnähte 12 an ihrer typischen Formgebung und Struktur erkennen. Insbesondere können die Auftragsschweißnähte 12 eine grobkörnigere Materialstruktur aufweisen als das erste und/oder das zweite Bauteil 10A, 10B, 11A.

Die ersten Bauteile 10A, 10B gemäß Fig. 3 und 4 sind mit den zweiten Bauteilen 11A beispielsweise entsprechend Fig. 1 verbunden, konkret durch das im Zusammenhang mit Fig. 2 beschriebene Verfahren.

Alternativ oder zusätzlich können die ersten Bauteile 10A, 10B der Schaufelkränze 1A, 1B gemäß Fig. 3 und 4 mehrteilig hergestellt werden, wobei die mehreren Teile (von denen dann jeweils eines ein erstes Bauteil und eines ein zweites Bauteil entsprechend Fig. 1 darstellt) nach dem Verfahren gemäß Fig. 2 miteinander stoffschlüssig verbunden werden, z.B. an den Schnittflächen der Querschnittsansicht gemäß Fig. 3 und 4, die dann als Verbindungsbereiche 100 dienen. Ferner können mehrere Schaufelkränze 1A, 1B als erste und als zweite Bauteile fungieren und z.B. axial hintereinandergeschaltet miteinander gemäß dem Verfahren nach Fig. 2 stoffschlüssig verbunden werden. Hier können z.B. axiale Stirnflächen der Schaufelkränze 1A, 1B (insbesondere der Ringe oder Scheiben der Schaufelkränze 1A, 1B oder für die Schaufelkränze 1A, 1B) als Verbindungsflächen 100 dienen, wie in Fig. 3 und 4 veranschaulicht. Die Verbindung der Schaufelkränze erfolgt dann z.B. entsprechend Fig. 1, insbesondere gemäß dem im Zusammenhang mit Fig. 2 beschriebenen Verfahren.

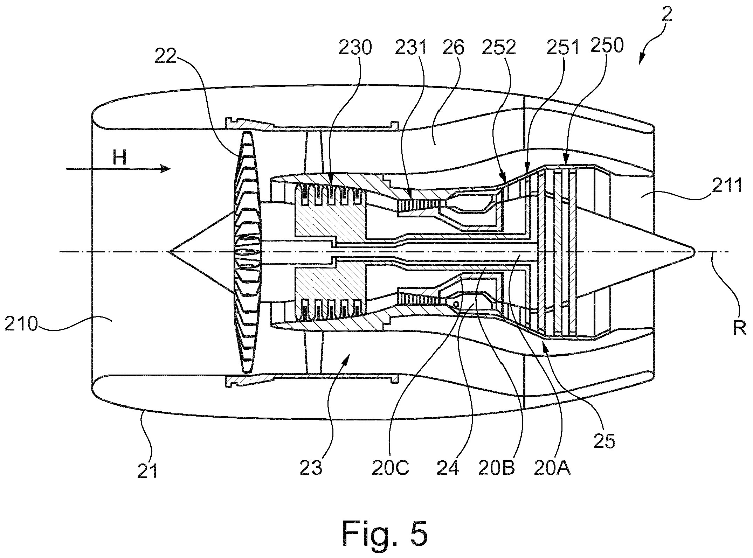

Die Schaufelkränze 1A, 1B gemäß Fig. 3 und 4 sind vorliegend beispielhaft als Schaufelkränze für einen Verdichter einer Strömungsmaschine (insbesondere für die nachfolgend beschriebene Gasturbine 2 gemäß Fig. 5) dargestellt. In entsprechender Weise können selbstverständlich auch Schaufelkränze für eine Turbine einer Strömungsmaschine (insbesondere für die nachfolgend beschriebene Gasturbine 2 gemäß Fig. 5) mit einer Verfahren entsprechend Fig. 2 hergestellt werden und wie vorstehend beschrieben ausgestaltet sein.

Fig. 5 zeigt eine Strömungsmaschine in der Ausführungsform einer Gasturbine 2 (hier als Triebwerk für ein Flugzeug). Die Gasturbine 2 umfasst mehrere, vorliegend drei, um eine gemeinsame Rotationsachse R drehbare Wellen 20A, 20B, 20C. Die Wellen 20A, 20B, 20C sind innerhalb eines Gehäuses 21 der Gasturbine 2 angeordnet. Das Gehäuse 21 definiert einen Lufteinlauf 210 und einen Luftauslass 211.

Durch den Lufteinlauf 210 strömt ein Luftstrom in die Gasturbine 2. Die Gasturbine 2 weist eine axiale Hauptströmungsrichtung H auf. Die Hauptströmungsrichtung H verläuft im Wesentlichen entlang der Rotationsachse R der Wellen 20A, 20B, 20C. In Richtung der Hauptströmungsrichtung H gesehen umfasst die Gasturbine 2 nach dem Lufteinlauf 210 einen Fan 22, einen Verdichter 23, eine Brennkammer 24, eine Turbine 25 und den Luftauslass 211.

Die Gasturbine 2 ist vorliegend dreistufig ausgeführt. Eine der Wellen 20A, 20B, 20C dient als Niederdruckwelle 20A, eine als Mitteldruckwelle 20B und eine als Hochdruckwelle 20C. Über die Niederdruckwelle 20A treibt eine Niederdruckturbine 250 der Turbine 25 den Fan 22 an. Über die Mitteldruckwelle 20B treibt eine Mitteldruckturbine 251 einen Mitteldruckverdichter 230 des Verdichters 23 an. Über die Hochdruckwelle 20C treibt eine Hochdruckturbine 252 der Turbine 25 einen Hochdruckverdichter 231 des Verdichters 23 an. Die Gasturbine 2 umfasst somit mehrere Verdichterstufen, nämlich insbesondere den Mitteldruckverdichter 230 und den Hochdruckverdichter 231. Ferner umfasst die Gasturbine 2 mehrere Turbinenstufen, nämlich insbesondere die Niederdruckturbine 250, die Mitteldruckturbine 251 und die Hochdruckturbine 252.

Der Fan 22 führt einem Bypasskanal 26 zur Erzeugung von Schub Luft zu. Der Fan 22 und der Verdichter 23 verdichten zudem den durch den Lufteinlauf 210 einlaufenden Luftstrom und führen ihn entlang der Hauptströmungsrichtung H zur Verbrennung in die Brennkammer 24. Aus der Brennkammer 24 austretende heiße Verbrennungsgase werden in der Turbine 25 entspannt, bevor sie durch eine Düse des Luftauslasses 211 austreten. Die Düse sorgt für eine Restentspannung der austretenden heißen Verbrennungsgase und für eine Vermischung mit Sekundärluft, wobei der austretende Luftstrom beschleunigt wird.

Der Verdichter 23 und die Turbine 25 der Gasturbine 2 umfassen zumindest einen, im vorliegenden Beispiel jeweils mehrere Schaufelkränze. Dabei sind jeweils mehrere Laufschaufelkränze vorgesehen, die gemeinsam mit der jeweiligen Welle 20A, 20B, 20C im Gehäuse 21 rotieren, und mehrere Leitschaufelkränze, die bezüglich dem Gehäuse 21 drehfest angeordnet sind.

Der Verdichter 23 und/oder die Turbine 25 umfasst/umfassen einen Schaufelkranz oder mehrere Schaufelkränze gemäß Fig. 3 oder Fig. 4 oder hergestellt durch das Verfahren gemäß Fig. 2. Hierdurch können der Verdichter 23 und/oder die Turbine 25 aus besonders robusten Materialien hergestellt sein und gleichzeitig ein besonders niedriges Gewicht aufweisen.

### Bezugszeichenliste

- 1A, 1B: Schaufelkranz
- 10, 10A, 10B: erstes Bauteil
- 100: Verbindungsbereich
- 11, 11A: zweites Bauteil
- 110: Verbindungsbereich
- 12: Auftragsschweißnaht
- 2: Gasturbine (Strömungsmaschine)
- 20A: Niederdruckwelle
- 20B: Mitteldruckwelle
- 20C: Hochdruckwelle
- 21: Gehäuse
- 210: Lufteinlass
- 211: Luftauslass
- 22: Fan
- 23: Verdichter
- 230: Mitteldruckverdichter
- 231: Hochdruckverdichter
- 24: Brennkammer
- 25: Turbine
- 250: Niederdruckturbine
- 251: Mitteldruckturbine
- 252: Hochdruckturbine
- 26: Bypasskanal
- 3: Schweißvorrichtung
- 30: Pulverzuführungsmittel
- 31: Laser
- H: Hauptströmungsrichtung
- R: Rotationsachse
- Z: Zwischenraum

## Patentansprüche

1. Verfahren zur Verbindung von Bauteilen, umfassend die folgenden Schritte:
- Bereitstellen (S100) eines ersten Bauteils (10, 10A, 10B) mit zumindest einem Verbindungsbereich (100), wobei zumindest der Verbindungsbereich (100) aus einer Metalllegierung besteht oder eine Metalllegierung umfasst;
- Bereitstellen (S101) zumindest eines zweiten Bauteils (11, 11A) mit einem Verbindungsbereich (110), wobei zumindest der Verbindungsbereich (110) aus einer Metalllegierung besteht oder eine Metalllegierung umfasst;
- Anordnen (S102) der Verbindungsbereiche (100, 110) des ersten und des zweiten Bauteils (10, 10A, 10B, 11, 11A) benachbart zueinander; und
- Verbinden (S103) der Verbindungsbereiche (100, 110) miteinander mittels generativer Fertigung, insbesondere durch Auftragsschweißen.

2. Verfahren nach Anspruch 1, **dadurch gekennzeichnet, dass** die Verbindungsbereiche derart geformt sind, dass durch das Anordnen der Verbindungsbereiche (100, 110) benachbart zueinander zwischen den Verbindungsbereichen (100, 110) ein Zwischenraum (Z) ausgebildet wird, wobei durch die generative Fertigung, insbesondere das Auftragsschweißen, Material in den Zwischenraum (Z) eingebracht wird.

3. Verfahren nach Anspruch 2, **dadurch gekennzeichnet, dass** der Zwischenraum (Z) trichterförmig oder wannenförmig ist.

4. Verfahren nach einem der vorhergehenden Ansprüche, **dadurch gekennzeichnet, dass** zumindest eines von dem ersten und dem zweiten Bauteil (10, 10A, 10B, 11, 11A) eine Nickelbasislegierung umfasst oder daraus besteht.

5. Verfahren nach einem der vorhergehenden Ansprüche, **dadurch gekennzeichnet, dass** das erste Bauteil (10, 10A, 10B) und das zweite Bauteil (11, 11A) unterschiedliche Materialien umfassen oder aus unterschiedlichen Materialien bestehen.

6. Verfahren nach einem der vorhergehenden Ansprüche, **dadurch gekennzeichnet, dass** die generative Fertigung Laserauftragsschweißen ist.

7. Verfahren nach einem der vorhergehenden Ansprüche, **dadurch gekennzeichnet, dass** das erste Bauteil (10A, 10B) mehrere Verbindungsbereiche (100) aufweist und mehrere zweite Bauteile (11A) bereitgestellt werden, wobei der Verbindungsbereich (110) jedes zweiten Bauteils (11A) derart benachbart zu jeweils einem Verbindungsbereich (100) des ersten Bauteils angeordnet wird, dass zwischen den benachbarten Verbindungsbereichen (100, 110) jeweils ein Zwischenraum (Z) ausgebildet wird, und wobei die jeweils benachbarten Verbindungsbereiche (100, 110) durch Auftragsschweißen miteinander verbunden werden.

8. Verfahren nach einem der vorhergehenden Ansprüche, **dadurch gekennzeichnet, dass** das erste Bauteil (10A, 10B) ein Schaufelträger oder ein Teil eines Schaufelträgers für eine Strömungsmaschine (2) ist.

9. Verfahren nach einem der vorhergehenden Ansprüche, **dadurch gekennzeichnet, dass** auch das zweite Bauteil (11) ein Schaufelträger oder ein Teil eines Schaufelträgers für eine Strömungsmaschine (2) ist.

10. Verfahren nach einem der vorhergehenden Ansprüche zur Herstellung einer Turbinen- oder Verdichterstufe für eine Strömungsmaschine (2), **dadurch gekennzeichnet, dass** das erste Bauteil (10A, 10B) in Form eines Rings oder einer Scheibe für eine Strömungsmaschine (2) bereitgestellt wird und das zumindest eine zweite Bauteil (11) in Form eines weiteren Rings oder einer weiteren Scheibe bereitgestellt wird.

11. Vorrichtung, insbesondere hergestellt durch das Verfahren nach einem der vorhergehenden Ansprüche, umfassend ein erstes Bauteil (10, 10A, 10B) mit zumindest einem Verbindungsbereich (100), zumindest ein zweites Bauteil (11, 11A) mit einem Verbindungsbereich (110), wobei die Verbindungsbereiche (100, 110) des ersten und des zweiten Bauteils (10, 10A, 10B, 11, 11A) jeweils aus einer Metalllegierung bestehen oder eine Metalllegierung umfassen und derart benachbart zueinander angeordnet sind, dass zwischen den Verbindungsbereichen (100, 110) ein Zwischenraum (Z) ausgebildet ist, und wobei die Verbindungsbereiche (100, 110) durch zumindest eine durch eine generative Fertigung erzeugte Naht, insbesondere zumindest eine Auftragsschweißnaht (12), miteinander verbunden sind, die den Zwischenraum (Z) zumindest teilweise ausfüllt.

12. Vorrichtung nach Anspruch 11, **dadurch gekennzeichnet, dass** die Vorrichtung als Turbinen- oder Verdichterstufe für eine Strömungsmaschine (2) ausgebildet ist, wobei das erste Bauteil (10, 10A, 10B) in Form eines Rings oder einer Scheibe für eine Strömungsmaschine (2) ausgebildet ist und zumindest ein zweites Bauteil (11) in Form eines weiteren Rings oder einer weiteren Scheibe ausgebildet ist.
